# EUROPEAN PATENT SPECIFICATION

(11) **EP 2 693 053 B1**
(45) Date of publication and mention of the grant of the patent: **21.09.2016**
(21) Application number: 12764937.4
(22) Date of filing: 08.03.2012
(51) Int. Cl.: F04B 43/10, F04B 43/00

(54) **BELLOWS PUMP**
BALGPUMPE
POMPE À SOUFFLETS

(30) Priority: 30.03.2011 JP 2011076360
(43) Date of publication of application: 05.02.2014
(73) Proprietor: Iwaki Co., Ltd., Tokyo 101-8558 (JP)
(72) Inventor: IWABUCHI, Kyouhei, Saitama 35-0041 (JP); TANABE, Hiroyuki, Sayama-shi, Saitama 350-1328 (JP); ONIDUKA, Toshiki, Iruma-gun, Saitama 354-0041 (JP); YOSHIDA, Atsushi, Iruma-gun, Saitama 354-0041 (JP)
(74) Representative: Grünecker Patent- und Rechtsanwälte PartG mbB
(86) International application number: PCT/JP2012/055955
(87) International publication number: WO 2012/132816

(56) References cited:
- EP-A1- 2 166 228
- WO-A1-90/04106
- DE-A1-102009 011 067
- DE-C- 671 148
- JP-A- H0 599 153
- JP-A- 2001 193 837
- JP-U- 3 138 916
- JP-U- 63 188 372
- JP-U- H02 132 130
- RU-C1- 2 018 711

## Description

### Technical Field

The present invention relates to a bellows pump that performs a pump operation using bellows separating a pump chamber and an operation chamber.

### Background Art

A bellows pump has a structure in which a bellows divides an enclosed region into a pump chamber and an operation chamber. Then the bellows pump operates to compress and extend the pump chamber by introducing and discharging a working fluid into and from the operation chamber. Known examples of such a bellows pump are, for example, those disclosed in Patent Document 1 and Patent Document 2 listed below.

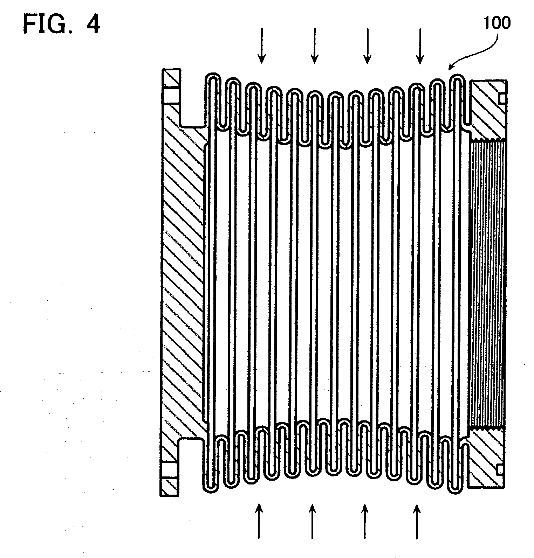

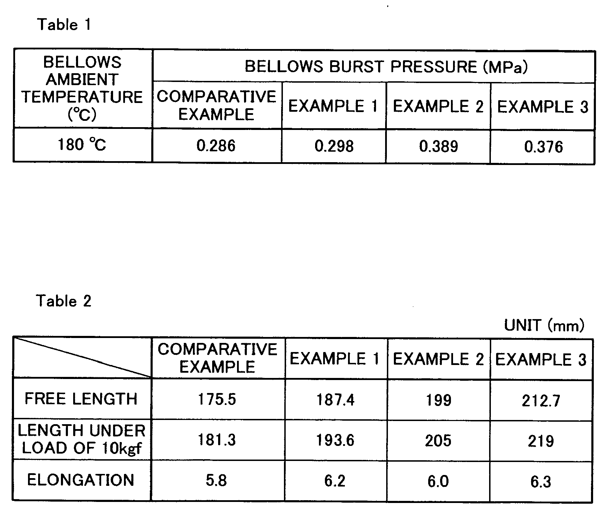

The bellows pumps disclosed in Patent Document 1 and Patent Document 2 have a configuration in which the bellows has an optimized shape to reduce a problem, such as deformation of a bellows 100 shown in FIG. 4 due to stress concentration caused by an operating pressure as shown by the arrows in FIG. 4. The bellows deformation arises if the pressure exceeds the limit of the bellows' pressure resistance performance or the temperature of the bellows increases too high. The problem has been addressed, therefore, by increasing the pressure resistance by changing the bellows shape as described above or increasing the bellows' wall thickness.

### Related Art Documents

### Patent Documents

Patent Document 1: Examined Japanese Patent Application Publication No. JP 2001-193836 A
Patent Document 2: Examined Japanese Patent Application Publication No. JP 2001-193837 A
Patent Document 3 : EP 2166 228 A1

### Summary of the Invention

### Problem to be solved By the Invention

Unfortunately, increasing the pressure resistance performance by changing the bellows shape as described above or increasing the wall thickness will restrict the motion of the bellows itself or increase the operating resistance, thus adversely affecting the discharge amount of a fluid to be transferred. Then, more force is needed to expand and contract the bellows to eliminate the affect on the discharge amount, thereby reducing the operating efficiency.

The present invention was accomplished in light of the above problems. It is an object of the invention to provide a bellows pump having a bellows that has good temperature characteristics and that may improve the pressure resistance performance without decreasing the operating efficiency.

### Means for solving the Problem

A bellows pump according to the present invention comprises: a case member that forms an axial space therein; closed-bottomed cylindrical bellows that are arranged in the space in an axially extendable/contractable manner and axially separate the space into a pump chamber and an operation chamber; suction valves that are provided on a suction side of the pump chamber and guide a fluid to be transferred to the pump chamber; and discharge valves that are provided on a discharge side of the pump chamber and discharge the fluid to be transferred from the pump chamber, wherein the bellows are extended/contracted by introducing a working fluid into the operation chamber and discharging the working fluid from the operation chamber, thus transferring the fluid to be transferred, and wherein each of the bellows is configured by alternately forming mountain portions and valley portions along the axial direction, and having, on a predetermined position in the axial direction, an annular ring portion integrally formed therewith.

A second bellows pump according to the present invention comprises: a pump head; a pair of bottom-closed cylindrical bellows provided on respective opposite sides of the pump head with their opening sides being opposed, each bellows forming a pump chamber therein and being axially extendable/contractable; a pair of bottom-closed cylindrical cylinders attached to the pump head with their opening portions being opposed, the cylinders being disposed coaxially to the pair of bellows to contain the respective bellows therein, the cylinders forming operation chambers between the cylinders and the pair of bellows; a pair of pump shafts passing through the respective bottoms of the pair of cylinders slidably in an airtight manner along the central axis of the cylinders, the pump shafts having first ends joined to the respective bottoms of the pair of bellows; a joint shaft joining second ends of the pair of pump shafts movably in the axial direction; and a valve unit attached to the pump head in the pump chambers, the valve unit introducing a fluid to be transferred from a suction opening of the fluid to be transferred to the pump chamber and introducing the fluid to be transferred from the pump chamber to a discharge opening of the fluid to be transferred, the pair of bellows being extended/contracted by introducing a working fluid into the operation chamber and discharging the working fluid from the operation chamber, thus transferring the fluid to be transferred, and each of the pair of bellows being configured by alternately forming mountain portions and valley portions along the axial direction and having, on a predetermined position in the axial direction, an annular ring portion integrally formed therewith.

In one preferred embodiment, the ring portion is formed, for example, in a plurality at a predetermined interval in the axial direction.

In another embodiment, the bellows comprises, for example, fluororesin.

### Effects of the Invention

The present invention may provide a bellows pump having a bellows that has good temperature characteristics and that may improve the pressure resistance performance without decreasing the operating efficiency.

### Brief Description of Drawings

FIG. 1 is a cross-sectional view of a configuration of a bellows pump according to one embodiment of the present invention;
FIG. 2 shows another example of the bellows of the bellows pump.
FIG. 3 shows still another example of the bellows of the bellows pump; and
FIG. 4 shows problems of the bellows of conventional bellows pumps.

### Embodiments for carrying out the Invention

With reference to the accompanying drawings, the embodiments of a bellows pump according to the present invention will be described in more detail.

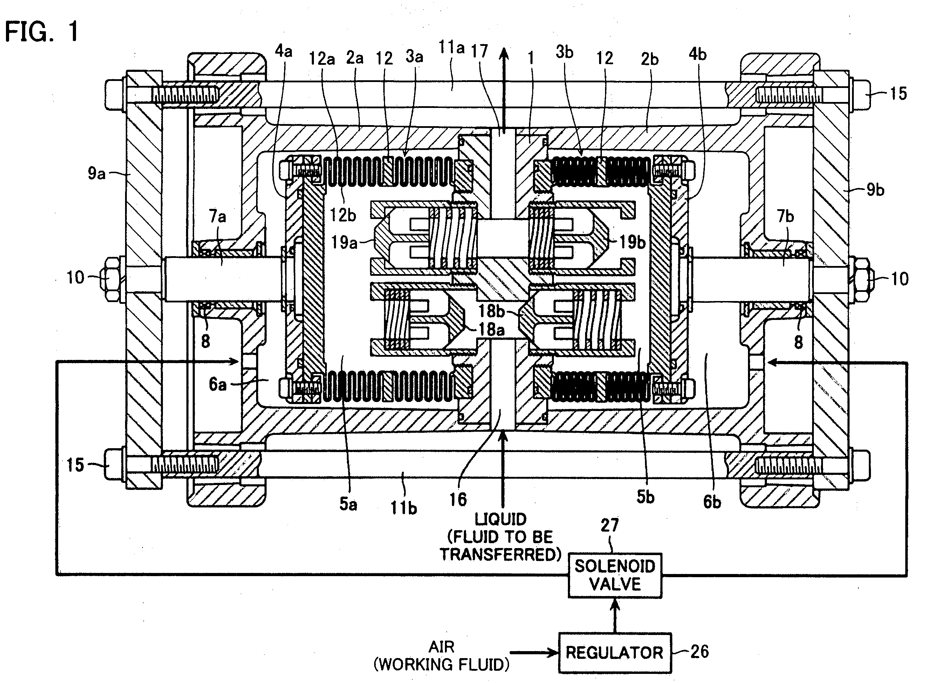

FIG. 1 is a cross-sectional view of a bellows pump according to one embodiment of the present invention and a schematic view of its peripheral mechanism. Note that although the bellows pump according to this embodiment will be described with respect to, by way of example, a bellows pump of a so-called multi-barrel type of a reciprocating pump structure, a bellows pump of a so-called single barrel type is also applicable.

The bellows pump is configured as follows. A pump head 1 is centrally disposed. Bottom-closed cylindrical cylinders 2a and 2b, which are case members, are coaxially disposed on the respective opposite sides of the pump head 1. The cylinders 2a and 2b comprise a pair of spaces formed therein. The spaces comprise respective bottom-closed cylindrical bellows 3a and 3b coaxially disposed therein.

The bellows 3a and 3b have opening ends secured to the pump head 1 and have respective shaft fixing plates 4a and 4b secured on their bottoms. The bellows 3a and 3b comprises, for example, fluororesin. The bellows 3a and 3b separate the inside spaces of the cylinders 2a and 2b into inside pump chambers 5a and 5b and outside operation chambers 6a and 6b, respectively.

Each of the bellows 3a and 3b has a structure that comprises mountain portions 12a and valley portions 12b, which are alternately formed in the axial direction, and an annular ring portion 12 integrally formed around an intermediate position in the axial direction. The bellows 3a and 3b have the same shape as a usual bellows without the ring portion 12. The number of mountain portions 12a and valley portions 12b are set to provide the same wall thickness and the same operating resistance as a usual bellows.

Shafts 7a and 7b extending coaxially have first ends secured to the respective shaft fixing plates 4a and 4b. The shafts 7a and 7b have second ends passing through the bottom centers of the cylinders 2a and 2b in an airtight manner via seal members 8 to the outside of the cylinders 2a and 2b, respectively. Joint plates 9a and 9b are secured to the second ends of the shafts 7a and 7b via nuts 10.

The joint plates 9a and 9b are joined together by joint shafts 11a and 11b at positions above and below the cylinders 2a and 2b. Each of the joint shafts 11a and 11b is secured to the joint plates 9a and 9b via bolts 15.

The pump head 1 comprises a suction opening 16 and a discharge opening 17 for a fluid to be transferred, the openings 16 and 17 being at positions facing the side surfaces of the pump. In addition, the pump head 1 comprises suction valves 18a and 18b at positions in a path from the suction opening 16 to the pump chambers 5a and 5b, and discharge valves 19a and 19b at positions in a path from the pump chambers 5a and 5b to the discharge opening 17.

Meanwhile, a working fluid such as an air from a working fluid source such as a not-shown air compressor is regulated to a predetermined pressure by a regulator 26 and supplied to a solenoid valve 27.

It is assumed here that the operation chamber 6a is in an exhaust state, the operation chamber 6b is in an air-introducing state, the pump chamber 5a is in an expansion process, and the pump chamber 5b is in a contracting process. Then, the suction valve 18a and the discharge valve 19b are in an open state and the suction valve 18b and the discharge valve 19a are in a closed state. The liquid to be transferred is thus introduced from the suction opening 16 to the pump chamber 5a and discharged from the pump chamber 5b via the discharge opening 17.

The bellows 3a and 3b repeat the expansion and contraction in the axial direction to achieve the operation by the expansion and contraction of the pump chambers 5a and 5b as described above. Then, even if the transfer pressure or the operating pressure is increased to transfer more fluid to be transferred or the temperature inside the pump increases during the operation, the ring portion 12 may provide high pressure resistance without using a large wall thickness, thus preventing the deformation or damage. In other words, each of the bellows 3a and 3b has a structure that may provide higher pressure resistance than a bellows without the ring portion 12 if they are set to have the same operating efficiency as the bellows without the ring portion 12.

Therefore, the bellows pump according to this embodiment may have better temperature characteristics and higher pressure resistance performance without reducing the operating efficiency than a conventional bellows pump comprising a bellows without the ring portion 12. Note that the bellows 3a and 3b may be configured as follows.

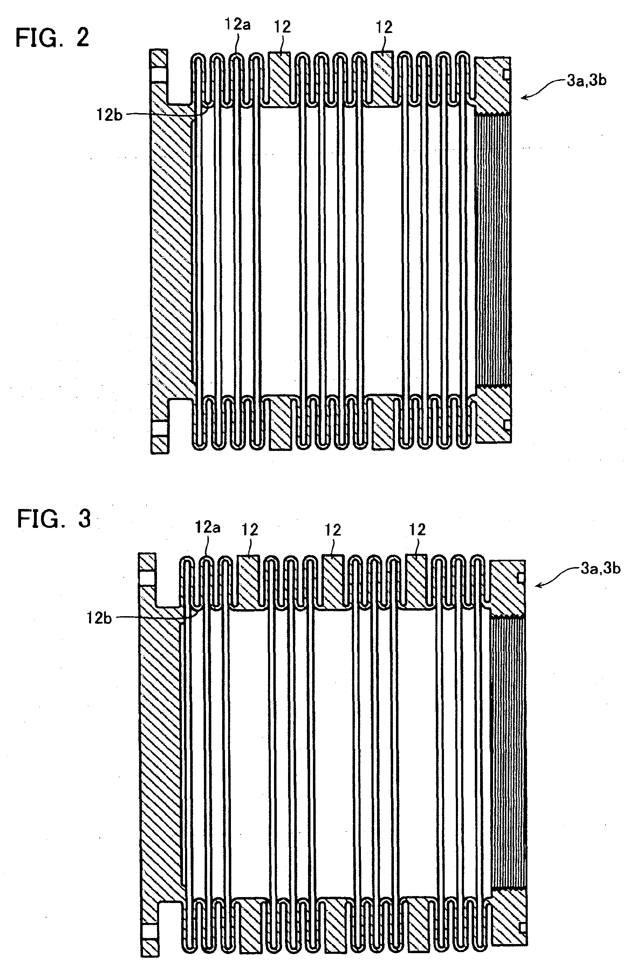

FIG. 2 shows another example of the bellows 3a and 3b of the bellows pump. FIG. 3 shows still another example of the bellows 3a and 3b of the bellows pump. With reference to FIG. 2 and FIG. 3, each of the bellows 3a and 3b comprises the mountain portions 12a and the valley portion 12b as well as two or three ring portions 12 formed at a predetermined interval in the axial direction, for example. In this way, the bellows 3a and 3b comprising a plurality of ring portions 12 may also improve the pressure resistance as in FIG. 1. Note that the ring portions 12 are not necessarily provided at regular intervals.

### [Examples]

The applicants performed the following burst test and operating resistance test to check the characteristics of the above bellows 3a and 3b. In these tests, all the bellows were made of fluororesin and had a wall thickness of 2 mm and 12 mountain portions 12a. In addition, the ring portion 12 had an axial direction thickness of 10 mm. The example 1 is for one ring portion 12, the example 2 is for two ring portions 12, the example 3 is for three ring portions 12, and the comparative example is for zero ring portion 12.

With reference to FIG. 4, the burst test was performed by applying external pressure to the bellows, and the operating resistance test was performed by pulling the bellows in the axial direction with a predetermined load. Table 1 below shows the burst test results. Table 2 below shows the operating resistance test results. Note that in the burst test, the temperature (ambient temperature) of the bellows was set to 180°C.

### [Table 1]

### [Table 2]

Table 1 shows that in the burst test, the bellows burst pressure (MPa) was 0.286 in the comparative example, while 0.298 in the example 1, 0.389 in the example 2, and 0.376 in the example 3, which all exceed the result in the comparative example. This proves that the pressure resistance is improved.

Meanwhile, table 2 shows that in the operating resistance test, the axial free length of the bellows was 175.5 mm in the comparative example, while 187.4 mm in the example 1, 199 mm in the example 2, and 212.7 mm in the example 3. In addition, the length under a load of 10 kgf was 181.3 mm in the comparative example, while 193.6 mm in the example 1, 205 mm in the example 2, and 219 mm in the example 3.

Therefore, the elongation of the bellows was 5.8 mm in the comparative example, while 6.2 mm in the example 1, 6 mm in the example 2, and 6.3 mm in the example 3. This result shows almost the same operating resistance in the comparative example and the examples 1, 2, and 3. This proves that the operating resistance remains unchanged regardless of the presence or absence of the ring portion 12.

As described above, in the bellows pump according to the present invention, the bellows 3a and 3b comprising the ring portion 12 may have good temperature characteristics and improve the pressure resistance performance without decreasing the operating efficiency.

### Description of reference numerals

- 1: pump head
- 2a, 2b: cylinder
- 3a, 3b: bellows
- 4a, 4b: shaft fixing plate
- 5a, 5b: pump chamber
- 6a, 6b: operation chamber
- 7a, 7b: shaft
- 9a, 9b: joint plate
- 11a, 11b: joint shaft
- 12: ring portion
- 12a: mountain portion
- 12b: valley portion
- 16: suction opening
- 17: discharge opening
- 18a, 18b: suction valve
- 19a, 19b: discharge valve
- 26: regulator
- 27: solenoid valve

## Claims

1. A bellows (3a, 3b) pump comprising:
a case member (2a, 2b) that forms an axial space therein;
closed-bottomed cylindrical bellows (3a, 3b) that are arranged in the space in an axially extendable/contractable manner and axially separate the space into a pump chamber (6a, 6b) (5a, 5b) and an operation chamber (6a, 6b);
suction valves (18a, 18b) that are provided on a suction side of the pump chamber (6a, 6b) (5a, 5b) and guide a fluid to be transferred to the pump chamber (6a, 6b) (5a, 5b); and
discharge valves (19a, 19b) that are provided on a discharge side of the pump chamber (6a, 6b) (5a, 5b) and discharge the fluid to be transferred from the pump chamber (6a, 6b) (5a, 5b),
the bellows (3a, 3b) being extended/contracted by introducing a working fluid into the operation chamber (6a, 6b) and discharging the working fluid from the operation chamber (6a, 6b), thus transferring the fluid to be transferred, and
each of the bellows (3a, 3b) being configured by alternately forming mountain portions (12a) and valley portions (12b) along the axial direction, **characterized by** having, on a predetermined position in the axial direction, where a valley portion (12b) is formed, an annular ring portion (12) integrally formed therewith, the annular ring portion (12) extending from the valley portion (12b) to the mountain portion (12a).

2. The bellows (3a, 3b) pump according to claim 1 , wherein the ring portion (12) is formed in a plurality at a predetermined interval in the axial direction.

3. The bellows (3a, 3b) pump according to claim 1 or 2, wherein
the bellows (3a, 3b) comprises fluororesin.

## Patentansprüche

1. Balgpumpe (3a, 3b), die umfasst:
ein Gehäuseelement (2a, 2b), in dem ein axialer Raum ausgebildet ist;
zylindrische Bälge (3a, 3b) mit geschlossenem Boden, die in dem Raum so angeordnet sind, dass sie axial ausgedehnt/zusammengedrückt werden können, und die den Raum axial in eine Pumpenkammer (5a, 5b) (6a, 6b) und eine Betriebskammer (6a, 6b) teilen;
Ansaugventile (18a, 18b), die sich an einer Ansaugseite der Pumpenkammer (6a, 6b) (5a, 5b) befinden und ein zu übertragendes Fluids zu der Pumpenkammer (6a, 6b) (5a, 5b) leiten; und
Ausstoßventile (19a, 19b), die sich an einer Ausstoßseite der Pumpenkammer (6a, 6b) (5a, 5b) befinden und des zu übertragene Fluids aus der Pumpenkammer (6a, 6b) (5a, 5b) ausstoßen,
wobei die Bälge (3a, 3b) ausgedehnt/zusammengedrückt werden, indem ein Arbeitsfluid in die Betriebskammer (6a, 6b) geleitet wird und des Arbeitsfluid aus der Betriebskammer (6a, 6b) ausgestoßen wird und so das zu übertragende Fluids übertragen wird, und
wobei jeder der Bälge (3a, 3b) hergestellt wird, indem abwechselnd vorstehende Abschnitte (12a) und vertiefte Abschnitte (12b) in der axialen Richtung ausgebildet werden, **dadurch gekennzeichnet, dass** an einer vorgegebenen Position in der axialen Richtung, an der ein vertiefter Abschnitt (12b) ausgebildet ist, ein ringförmiger Abschnitt (12) integral damit ausgebildet ist, wobei sich der ringförmige Abschnitt (12) von dem vertieften Abschnitt (12b) zu dem vorstehenden Abschnitt (12a) erstreckt.

2. Balgpumpe (3a, 3b) nach Anspruch 1, wobei der Ringabschnitt (12) in einer Vielzahl in einem vorgegebenen Abstand in der axialen Richtung ausgebildet ist.

3. Balgpumpe (3a, 3b) nach Anspruch 1 oder 2, wobei
der Balg (3a, 3b) Fluor-Kunststoff umfasst.

## Revendications

1. Pompe à soufflets (3a, 3b) comprenant :
un élément formant boîtier (2a, 2b) qui forme un espace axial à l'intérieur ;
des soufflets cylindriques à fond fermé (3a, 3b) qui sont disposés dans l'espace d'une manière extensible/contractible au plan axial et qui séparent axialement l'espace en un compartiment de pompe (6a, 6b) (5a, 5b) et un compartiment de fonctionnement (6a, 6b) ;
des vannes d'aspiration (18a, 18b) qui sont prévues sur un côté d'aspiration du compartiment de pompe (6a, 6b) (5a, 5b) et qui guident un liquide à transférer vers le compartiment de pompe (6a, 6b) (5a, 5b) ; et
des vannes d'évacuation (19a, 19b) qui sont prévues sur un côté d'évacuation du compartiment de pompe (6a, 6b) (5a, 5b) et qui évacuent le liquide à transférer depuis le compartiment de pompe (6a, 6b) (5a, 5b),
les soufflets (3a, 3b) étant étendus/contractés par l'introduction d'un liquide de travail dans le compartiment de fonctionnement (6a, 6b) et évacuant le liquide de travail depuis le compartiment de fonctionnement (6a, 6b), transférant ainsi le liquide à transférer, et
chacun des soufflets (3a, 3b) étant configuré en formant alternativement des parties montagnes (12a) et des parties vallées (12b) le long du sens axial, **caractérisés en ce qu'**ils présentent, sur une position prédéterminée dans le sens axial, où une partie vallée (12b) est formée, une partie en bague annulaire (12) formée intégralement avec celle-ci, la partie en bague annulaire (12) s'étendant depuis la partie vallée (12b) jusqu'à la partie montagne (12a).

2. Pompe à soufflets (3a, 3b) selon la revendication 1, où la partie en bague annulaire (12) est formée en une pluralité selon un intervalle prédéterminé dans le sens axial.

3. Pompe à soufflets (3a, 3b) selon la revendication 1 ou 2, où
les soufflets (3a, 3b) comprennent de la résine fluorée.
